# FASCICULE DE BREVET EUROPEEN

(11) **EP 2 089 250 B1**
(45) Date de publication et mention de la délivrance du brevet: **11.02.2015**
(21) Numéro de dépôt: 07857283.1
(22) Date de dépôt: 07.12.2007
(51) Int. Cl.: B60R 5/04

(54) **PLANCHER DE COFFRE AVEC LOGEMENT POUR TENDELET**
KOFFERRAUMBODEN MIT AUFNAHMEVORRICHTUNG FÜR EINE GEPÄCKABDECKUNG
TRUNK FLOOR WITH HOUSING FOR BACK COVER

(30) Priorité: 12.12.2006 FR 0610813
(43) Date de publication de la demande: 19.08.2009
(73) Titulaire: Renault s.a.s., 92100 Boulogne-Billancourt (FR)
(72) Inventeur: BIZARD, Arnaud, 78000 Versailles (FR); HOLLEVILLE, Francis, 78470 Saint Remy Les Chevreuse (FR)
(86) Numéro de dépôt international: PCT/EP2007/063492
(87) Numéro de publication internationale: WO 2008/071629

(56) Documents cités:
- WO-A1-02/02373
- DE-A1- 10 151 482
- DE-A1- 10 208 994
- DE-A1- 19 815 466
- GB-A- 2 329 623
- GB-A- 2 410 223
- US-A- 5 080 417
- US-A- 5 322 335
- US-A- 6 050 202
- US-B1- 6 290 277

## Description

L'invention concerne un plancher de coffre particulièrement adapté à un véhicule automobile, pouvant occuper deux positions, pour former une configuration de coffre et une configuration break. Elle concerne aussi un véhicule automobile en tant que tel, incluant un tel plancher de coffre, ainsi qu'un procédé de transformation d'un plancher de coffre de la configuration coffre vers la configuration break.

Il est connu par exemple du document US5011208 que les sièges arrière d'un véhicule automobile peuvent occuper deux positions, une position relevée dans laquelle ils sont aptes à accueillir des passagers et dans laquelle ils délimitent une zone arrière de rangement, le coffre dit « en configuration normale », et une position rabattue, dans laquelle ils permettent de prolonger la zone de rangement, formant un coffre dit « en configuration break ». Un premier problème se pose d'offrir un plancher relativement plat dans la configuration break du coffre, depuis la surface supérieure des dossiers rabattus jusqu'à l'arrière du véhicule, tout en offrant un volume maximal de rangement dans les deux configurations.

D'autre part, il est connu que de tels véhicules automobiles comprennent un élément de couverture de type plage arrière amovible susceptible de couvrir le coffre dans sa configuration normale, s'étendant longitudinalement et horizontalement entre la partie arrière supérieure des sièges redressés et la paroi arrière du véhicule. Cet élément de couverture peut se présenter sous la forme d'un tendelet consistant en un rouleau fixé sur chaque paroi latérale du véhicule et comprenant une toile qui peut être déployée vers l'arrière, comme présenté dans les documents US5011208 et FR2863566. Un second problème technique consiste à prévoir un rangement de cet élément de couverture du coffre, plage arrière amovible ou tendelet, notamment lorsque le coffre est dans la configuration break, puisque dans cette configuration break, sa présence devient inutile et même gênante. Sans rangement adapté, cet élément risque d'être égaré ou détérioré par le chargement du coffre.

Le document US5011208 résout le premier problème en positionnant le plancher du coffre de manière surélevée, afin d'être aligné avec le dossier des sièges arrière quand ils sont rabattus. Cela présente l'inconvénient de ne pas optimiser le volume du coffre qui est ainsi réduit. D'autre part, ce document résout le second problème par un positionnement déporté du tendelet, qui exige une longueur de toile plus importante. Le document FR2863566 prévoit un logement du tendelet à l'avant des sièges arrières.

Aucune des solutions existantes ne répond de manière satisfaisante aux deux problèmes techniques mentionnés précédemment et un objet de la présente invention consiste donc à proposer un nouveau plancher de coffre pouvant occuper deux configurations, dites normale et break.

Plus précisément, un premier objet de la présente invention consiste à proposer un plancher de coffre qui permet à la fois d'obtenir un volume optimal de rangement dans les deux configurations du coffre et un plancher relativement plat dans la configuration break.

Un second objet de la présente invention consiste à proposer un rangement d'un tendelet notamment pour la position break du coffre.

Enfin, un troisième objet de la présente invention consiste à proposer un procédé de transformation du coffre simple et convivial de la configuration normale vers la break.

L'invention est définie par les revendications 1 et 11.

Les dimensions de la béquille sont telles qu'elle est apte à délimiter un volume de rangement sous le tapis dans la configuration break qui est adapté au logement d'un tendelet d'un véhicule automobile.

Selon une variante d'exécution, une bande antérieure est liée à l'extrémité du tapis antérieur amovible de manière articulée, de manière à ce que son extrémité antérieure soit apte à venir en appui sur le dossier de sièges arrières d'un véhicule automobile dans les deux configurations.

Selon une variante d'exécution, le niveau du plancher du coffre est tel que dans la configuration break, la bande articulée occupe une position sensiblement horizontale, alignée avec la surface supérieure d'un siège replié d'un véhicule automobile.

La béquille peut occuper une position couchée dans la configuration normale du coffre, un mécanisme lui permettant de prendre sa position relevée automatiquement lorsque le tapis antérieur du plancher du coffre est soulevé.

Des dispositifs d'accrochage peuvent permettre de fixer temporairement le tapis du coffre dans une position haute permettant de positionner un tendelet dans le volume de rangement au niveau de la béquille avant de positionner le tapis dans sa configuration break.

Selon une variante d'exécution, le plancher de coffre pour véhicule automobile peut aussi comprendre un tapis arrière, mobile autour d'un axe antérieur afin de pouvoir libérer un accès vers un bac de rangement positionné sous le plancher du coffre.

Ce tapis arrière peut comprendre des moyens d'accrochage pour rester en position haute de manière à compartimenter le coffre. Il peut comporter un premier volet mobile apte à permettre le compartimentage du coffre et un deuxième volet mobile apte à recouvrir l'accès au bac de rangement, les deux volets pouvant être maintenus ensemble en position relevée.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente une vue partielle d'un coffre de véhicule automobile selon un mode d'exécution de l'invention ;
la figure 2 représente une vue schématique selon une coupe par un plan vertical et longitudinal de la partie antérieure du coffre d'un véhicule automobile lors de la phase initiale du procédé de transformation de sa configuration normale vers la configuration break selon le mode d'exécution de l'invention ;
la figure 3 représente une vue schématique selon une coupe par un plan vertical et longitudinal de la partie antérieure du coffre d'un véhicule automobile lors de la phase finale du procédé de transformation de sa configuration normale vers la configuration break selon le mode d'exécution de l'invention ;
la figure 4 illustre une vue arrière de la partie arrière du coffre selon un mode d'exécution de l'invention ;

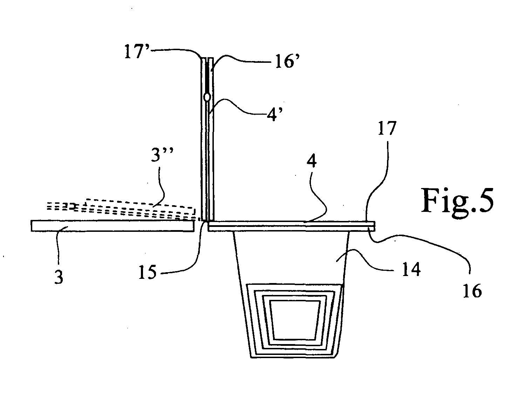

la figure 5 représente une vue schématique selon une coupe par un plan vertical et longitudinal de la partie arrière du coffre selon le mode d'exécution de l'invention.

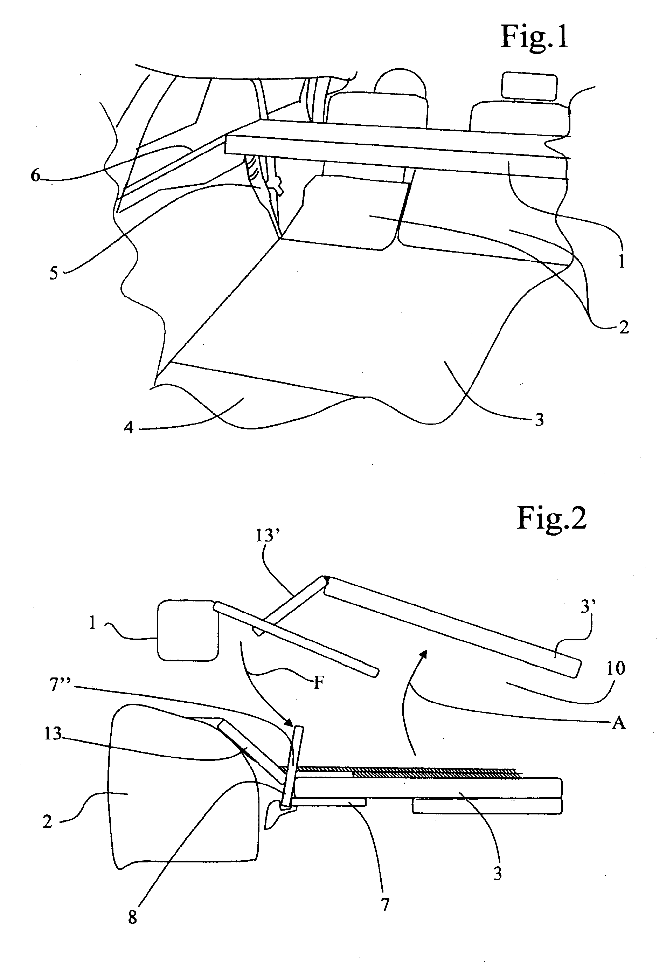

La figure 1 illustre une vue partielle du coffre d'un véhicule automobile selon un mode d'exécution de l'invention depuis l'arrière du véhicule. Ce véhicule comprend un tendelet 1 représenté dans une position enroulée, fixé sur les parois latérales du véhicule à une hauteur correspondant à la partie haute des sièges arrières 2 du véhicule, représentés dans une configuration semi-repliée. Le plancher du coffre comprend un tapis de coffre composé d'un tapis antérieur 3, dans la continuité d'un tapis arrière 4 distinct et indépendant, ou bien relié au tapis 3. Ces tapis sont représentés dans leur position basse correspondant à la configuration normale du coffre. La paroi latérale du véhicule comprend un emplacement 5 prévu pour un accrochage du tapis antérieur 3 du coffre, qui sera explicité ci-après, et des tablettes latérales 6 prévues pour recevoir le rouleau déployé du tendelet 1.

Ci-après, nous utiliserons différentes références 3, 3' et 3" pour désigner le même tapis antérieur du plancher du coffre mais dans des positions différentes. La même règle sera appliquée aux autres éléments mobiles.

La figure 2 illustre la partie antérieure du coffre d'un véhicule automobile, dont le plancher se compose d'un tapis antérieur 3 comprenant une partie avant 13 articulée, qui s'étend transversalement sur toute la largeur du véhicule automobile. Dans la configuration normale du coffre, le tapis 3 est disposé horizontalement au plus bas et la surface antérieure 13 forme une pente vers le haut, son extrémité avant se trouvant en appui sur le dossier arrière des sièges 2. Cette configuration du tapis antérieur 3 permet de délimiter un volume 10 optimal du coffre, limité dans sa partie haute par le tendelet 1, tout en assurant une continuité de son plancher dans sa zone antérieure grâce à l'élément articulé 13.

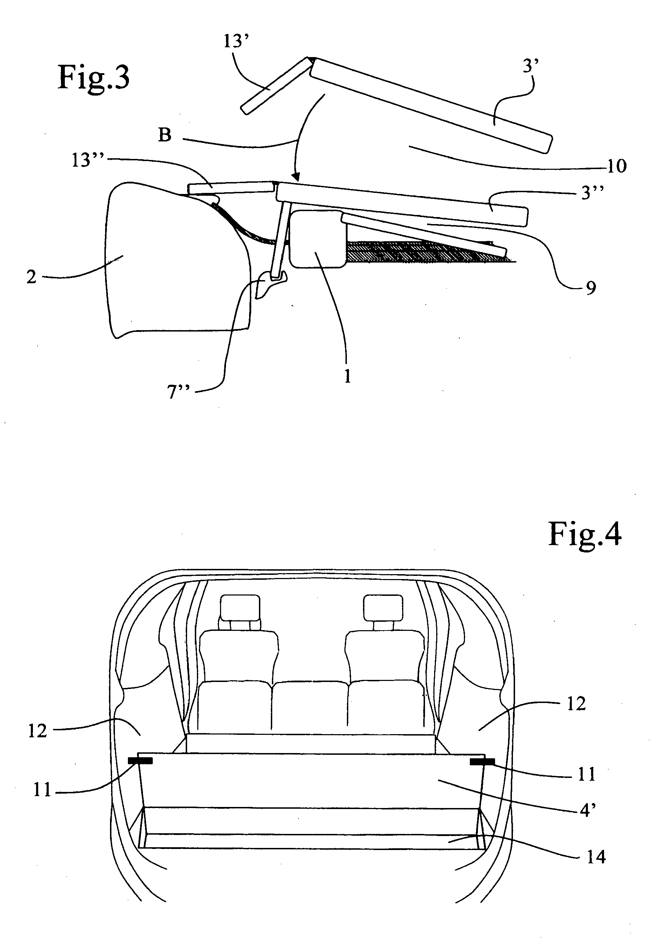

La figure 3 illustre le même coffre dans la configuration break. La partie avant du tapis antérieur 3" est surélevée et maintenue en appui sur une béquille 7", sa partie arrière restant approximativement au même niveau que dans la configuration normale. Le tapis 3" présente ainsi une légère pente, faible car le tapis qui s'étend sur au moins la moitié de la longueur du coffre est relativement long et car la béquille 7" est de faible hauteur, correspondant aux dimensions du tendelet 1 de sorte de former un volume de rangement 9 sous le tapis 3" correspondant au plus juste au volume nécessaire pour ranger le tendelet 1, éventuellement prolongé par une bavette, comme représenté. Dans cette configuration, la partie avant articulée 13" du tapis 3" occupe une position sensiblement horizontale, toujours en appui sur le siège 2 replié du véhicule automobile. L'ensemble du plancher occupe ainsi une position continue en formant une surface sensiblement horizontale, depuis la surface supérieure des sièges repliés jusqu'à l'arrière du véhicule. Cette surface du plancher présente une légère pente d'une dizaine de degrés, au moins dans sa partie antérieure, qui s'aligne ainsi avec la pente naturelle habituelle des dossiers des sièges 2 dans leur position rabattue.

Le procédé de transformation du coffre dans la configuration break repose donc sur les étapes suivantes, illustrées sur les figures 2 et 3 :
- le tapis du coffre est soulevé et positionné dans une position haute 3' transitoire, selon la flèche A, sa partie antérieure pouvant se loger dans des accroches latérales 5 prévues pour cela ;
- cette position relevée intermédiaire du tapis 3' permet de déplacer le tendelet 1 selon la flèche F pour le loger dans le volume 9 prévu en arrière de la béquille 7", au voisinage de la zone arrière des sièges 2 ;
- dans le même temps, la béquille 7, horizontale dans la configuration normale du coffre est relevée jusqu'à une position proche de la verticale, par une rotation autour d'un axe 8. Avantageusement, ce mouvement est automatique, sous l'effet d'un ressort non représenté qui provoque cette rotation de la béquille dès le soulèvement du tapis 3 ;
- lorsque le tendelet 1 est bien en place, le tapis 3' est redescendu de sa position haute selon la flèche B, pour venir reposer sa partie avant sur la béquille relevée 7", alors que sa partie articulée 13" devient sensiblement horizontale.

Les étapes inverses permettent de revenir dans la configuration normale du coffre.

Cette solution permet bien d'atteindre les objets recherchés et présente les avantages suivants :
- dans la position normale du coffre, le plancher est placé au plus bas, et un tendelet classique peut être utilisé, afin de délimiter un volume de coffre 10 optimisé ;
- dans la position break du coffre, le plancher est légèrement surélevé, au niveau de sa partie avant, afin de délimiter un volume de rangement 9 particulièrement adapté pour le tendelet, tout en formant un plancher continu et sensiblement horizontal sur l'ensemble du coffre, depuis la surface supérieure des dossiers des sièges 2 rabattus jusqu'à l'arrière du véhicule. La solution répond donc de manière combinée aux deux problèmes techniques mentionnés précédemment ;
- la béquille assure ainsi une fonction de maintien du plancher du coffre et de renfort, lui permettant de supporter une charge sans dégrader le tendelet qu'il recouvre ;
- cette transformation est simple et conviviale.

Cette solution a été présentée dans le cadre d'un véhicule avec un tendelet. Elle conserve toutefois un intérêt même sans tendelet, offrant toujours un volume de rangement 9 pour tout autre élément tout en formant un plancher continu et sensiblement horizontal dans la configuration break. La béquille peut être intégrée au plancher de coffre ou être un élément distinct rapporté. Elle s'étend sur toute la largeur du véhicule afin de représenter un renfort efficace. Elle peut aussi en variante s'étendre sur une partie seulement de cette largeur. Son mouvement comme son mécanisme d'actionnement, automatique ou manuel pour chacun de ses deux mouvements d'ouverture ou de fermeture, peuvent être quelconques, sans sortir de l'invention. De plus, le tapis de coffre pourrait avoir d'autres formes et dimensions, s'étendre par exemple sur toute la longueur du coffre. Il s'agit d'un élément suffisamment rigide pour supporter des charges tout en étant suffisamment léger pour être manuellement manipulable.

Dans le mode d'exécution décrit, le plancher du coffre comprend aussi un tapis arrière 4 mobile indépendamment du tapis avant 3, afin de pouvoir offrir des fonctions complémentaires habituelles et avantageuses. Ce tapis arrière 4 s'étend depuis l'arrière du véhicule jusqu'au niveau des roues du véhicule, jusqu'à sa jonction avec le tapis avant 3 de sorte de former un plancher continu et sensiblement horizontal. Ce tapis arrière 4 forme de plus un second volet mobile, en rotation autour de son extrémité antérieure 15, pour pouvoir occuper une position relevée 4', permettant de libérer un accès vers un bac de rangement 14 disposé sous le tapis du coffre. Un mécanisme d'accrochage 11 est prévu sur les parties latérales du tapis 4, afin de permettre son maintien dans la position relevée 4', basé par exemple sur un système de loquet.

Le tapis 4 peut aussi comporter deux volets mobiles, l'un 16 destiné à recouvrir l'accès au bac, l'autre 17 destiné au compartimentage du coffre. Les deux volets 16', 17', peuvent être maintenus ensemble en position relevée.

## Revendications

1. Plancher de coffre pour véhicule automobile **caractérisé en ce qu'**il comprend une béquille (7,7") s'étendant sur la largeur du coffre et un tapis de coffre composé d'un tapis antérieur amovible (3,3',3") et d'un tapis arrière (4), le tapis antérieur amovible (3,3',3") pouvant occuper deux positions, une position basse pour définir une configuration normale du coffre du véhicule, dans laquelle il vient dans la continuité du tapis arrière (4) et une position dans laquelle sa partie avant est relevée et en appui sur la béquille (7"), laquelle s'étend le long d'un bord avant du tapis antérieur (3,3',3"), pour définir un volume de rangement (9) sous le tapis (3") dans une configuration break du véhicule automobile, sa partie arrière (4) restant approximativement au même niveau que dans la configuration normale.

2. Plancher de coffre pour véhicule automobile selon la revendication 1 **caractérisé en ce que** les dimensions de la béquille (7, 7") sont telles qu'elle est apte à délimiter un volume de rangement (9) sous le tapis (3") dans la configuration break qui est adapté au logement d'un tendelet (1) d'un véhicule automobile.

3. Plancher de coffre pour véhicule automobile selon la revendication 1 ou 2 **caractérisé en ce qu'**une bande antérieure (13, 13', 13") est liée à l'extrémité du tapis antérieur amovible (3, 3', 3") de manière articulée, de manière à ce que son extrémité antérieure soit apte à venir en appui sur le dossier de sièges arrières (2) d'un véhicule automobile dans les deux configurations.

4. Plancher de coffre pour véhicule automobile selon la revendication 3 **caractérisé en ce que** le niveau du plancher du coffre est tel que dans la configuration break, la bande articulée (13") occupe une position sensiblement horizontale, alignée avec la surface supérieure d'un siège (2) replié d'un véhicule automobile.

5. Plancher de coffre pour véhicule automobile selon l'une des revendications précédentes **caractérisé en ce que** la béquille (7) occupe une position couchée dans la configuration normale du coffre et **en ce qu'**un mécanisme permet à la béquille (7) de prendre sa position relevée (7") automatiquement lorsque le tapis antérieur (3) du plancher du coffre est soulevé.

6. Plancher de coffre pour véhicule automobile selon l'une des revendications précédentes **caractérisé en ce qu'**il comprend des dispositifs d'accrochage (5) permettant de fixer temporairement le tapis (3') du coffre dans une position haute permettant de positionner un tendelet (1) dans le volume de rangement (9) au niveau de la béquille (7") avant de positionner le tapis (3") dans sa configuration break.

7. Plancher de coffre pour véhicule automobile selon l'une des revendications précédentes **caractérisé en ce qu'**il comprend un tapis arrière (4), mobile autour d'un axe antérieur (15) afin de pouvoir libérer un accès vers un bac de rangement (14) positionné sous le plancher du coffre.

8. Plancher de coffre pour véhicule automobile selon la revendication précédente **caractérisé en ce que** le tapis arrière (4) comprend des moyens d'accrochage (11) pour rester en position haute (4') de manière à compartimenter le coffre.

9. Plancher de coffre pour véhicule automobile selon la revendication 7 ou 8 **caractérisé en ce que** le tapis arrière (4) comporte un premier volet mobile (17) apte à permettre le compartimentage du coffre et un deuxième volet mobile (16) apte à recouvrir l'accès au bac de rangement (14).

10. Plancher de coffre pour véhicule automobile selon la revendication précédente **caractérisé en ce que** les deux volets (16, 17) peuvent être maintenus ensemble en position relevée.

11. Procédé de transformation d'un plancher de coffre d'une configuration normale basse vers une configuration break, le plancher de coffre comprenant un tapis de coffre composé d'un tapis antérieur amovible (3,3',3") dans la continuité d'un tapis arrière (4) dans la configuration normale basse, le procédé comprenant les étapes suivantes :
- le tapis antérieur (3) du coffre est soulevé et positionné dans une position haute (3') transitoire ;
- une béquille (7) s'étendant sur la largeur du coffre passe de la position couchée dans une position proche de la verticale (7"), par une rotation autour d'un axe (8) ;
- un tendelet (1) est déplacé dans un volume de rangement (9) sur l'avant du coffre aux abords de la béquille (7");
- l'avant du tapis (3") est redescendu en appui sur la béquille relevée (7").

## Patentansprüche

1. Kofferraumboden für ein Kraftfahrzeug, **dadurch gekennzeichnet, dass** er eine Stütze (7, 7"), die sich über die Breite des Kofferraumes erstreckt, und eine Kofferraummatte, die aus einer abnehmbaren vorderen Matte (3, 3', 3") und einer hinteren Matte (4) besteht, aufweist, wobei die abnehmbare vordere Matte (3, 3', 3") zwei Positionen einnehmen kann, eine niedrige Position, um eine normale Konfiguration des Kofferraumes des Fahrzeugs zu definieren, in welcher sie sich an die hintere Matte (4) anschließt, und eine Position, in der ihr vorderer Teil angehoben ist und sich auf die Stütze (7") stützt, welche sich entlang eines vorderen Randes der vorderen Matte (3, 3', 3") erstreckt, um in einer Kombi-Konfiguration des Kraftfahrzeugs einen Stauraum (9) unter der Matte (3") zu definieren, während ihr hinterer Teil (4) annähernd auf derselben Höhe verbleibt wie in der normalen Konfiguration.

2. Kofferraumboden für ein Kraftfahrzeug nach Anspruch 1, **dadurch gekennzeichnet, dass** die Abmessungen der Stütze (7, 7") so beschaffen sind, dass sie geeignet ist, in der Kombi-Konfiguration einen Stauraum (9) unter der Matte (3") zu begrenzen, welcher für die Aufnahme einer Gepäckabdeckung (1) eines Kraftfahrzeugs eingerichtet ist.

3. Kofferraumboden für ein Kraftfahrzeug nach Anspruch 1 oder 2, **dadurch gekennzeichnet, dass** ein vorderes Band (13, 13', 13") gelenkig mit dem Ende der abnehmbaren vorderen Matte (3, 3', 3") verbunden ist, derart, dass sein vorderes Ende geeignet ist, in den beiden Konfigurationen an der Rücksitzbanklehne (2) eines Kraftfahrzeugs zur Anlage zu kommen.

4. Kofferraumboden für ein Kraftfahrzeug nach Anspruch 3, **dadurch gekennzeichnet, dass** der Kofferraumboden auf einer solchen Höhe angeordnet ist, dass in der Kombi-Konfiguration das Gelenkband (13") eine im Wesentlichen horizontale Position einnimmt, die mit der Oberseite eines umgeklappten Sitzes (2) eines Kraftfahrzeugs fluchtet.

5. Kofferraumboden für ein Kraftfahrzeug nach einem der vorhergehenden Ansprüche, **dadurch gekennzeichnet, dass** die Stütze (7) in der normalen Konfiguration des Kofferraumes eine liegende Position einnimmt, und dadurch, dass ein Mechanismus der Stütze (7) ermöglicht, ihre aufgerichtete Position (7") automatisch einzunehmen, wenn die vordere Matte (3) des Kofferraumbodens angehoben wird.

6. Kofferraumboden für ein Kraftfahrzeug nach einem der vorhergehenden Ansprüche, **dadurch gekennzeichnet, dass** er Einhängevorrichtungen (5) aufweist, die es ermöglichen, die Matte (3') des Kofferraumes zeitweilig in einer hohen Position zu befestigen, die es ermöglicht, eine Gepäckabdeckung (1) in dem Stauraum (9) auf der Höhe der Stütze (7") zu positionieren, bevor die Matte (3") in ihrer Kombi-Position positioniert wird.

7. Kofferraumboden für ein Kraftfahrzeug nach einem der vorhergehenden Ansprüche, **dadurch gekennzeichnet, dass** er eine hintere Matte (4) aufweist, die um eine vordere Achse (15) beweglich ist, um einen Zugang zu einem Staufach (14) freigeben zu können, das unter dem Kofferraumboden positioniert ist.

8. Kofferraumboden für ein Kraftfahrzeug nach dem vorhergehenden Anspruch, **dadurch gekennzeichnet, dass** die hintere Matte (4) Einhängemittel (11) aufweist, um in einer hohen Position (4') zu verbleiben, derart, dass sie den Kofferraum in Teilräume aufteilt.

9. Kofferraumboden für ein Kraftfahrzeug nach Anspruch 7 oder 8, **dadurch gekennzeichnet, dass** die hintere Matte (4) eine erste bewegliche Klappe (17), die geeignet ist, die Aufteilung des Kofferraumes in Teilräume zu ermöglichen, und eine zweite bewegliche Klappe (16), die geeignet ist, den Zugang zu dem Staufach (14) abzudecken, aufweist.

10. Kofferraumboden für ein Kraftfahrzeug nach dem vorhergehenden Anspruch, **dadurch gekennzeichnet, dass** die zwei Klappen (16, 17) in der angehobenen Position zusammengehalten werden können.

11. Verfahren zur Umwandlung eines Kofferraumbodens aus einer niedrigen normalen Konfiguration in eine Kombi-Konfiguration, wobei der Kofferraumboden eine Kofferraummatte aufweist, die aus einer abnehmbaren vorderen Matte (3, 3', 3") besteht, die sich in der niedrigen normalen Konfiguration an eine hintere Matte (4) anschließt, wobei das Verfahren die folgenden Schritte aufweist:
- die vordere Matte (3) des Kofferraumes wird angehoben und in einer vorübergehenden hohen Position (3') positioniert;
- eine Stütze (7), die sich über die Breite des Kofferraumes erstreckt, bewegt sich durch eine Drehung um eine Achse (8) aus der liegenden Position in eine der vertikalen Position nahekommende Position (7");
- eine Gepäckabdeckung (1) wird in einen Stauraum (9) am vorderen Teil des Kofferraumes neben der Stütze (7") bewegt;
- der vordere Teil der Matte (3") wird wieder abgesenkt, so dass er an der aufgerichteten Stütze (7") zur Anlage kommt.

## Claims

1. Boot floor for a motor vehicle, **characterized in that** it comprises a stand (7, 7") extending over the width of the boot and a boot carpet composed of a removable front carpet (3, 3', 3") and of a rear carpet (4), the removable front carpet (3, 3', 3") being able to occupy two positions, a lower position to define a normal configuration of the boot of the vehicle, in which it comes in the continuity of the rear carpet (4), and a position in which its front part is raised and bears on the stand (7"), which extends along a front edge of the front carpet (3, 3', 3"), to define a storage volume (9) below the carpet (3") in an estate configuration of the motor vehicle, its rear part (4) remaining approximately at the same level as in the normal configuration.

2. Boot floor for a motor vehicle according to Claim 1, **characterized in that** the dimensions of the stand (7, 7") are such that it is able to delimit a storage volume (9) below the carpet (3") in the estate configuration which is adapted to house a canopy (1) of a motor vehicle.

3. Boot floor for a motor vehicle according to Claim 1 or 2, **characterized in that** a front strip (13, 13', 13") is connected to the end of the removable front carpet (3, 3', 3") in an articulated manner, in such a way that its front end is able to bear on the back of rear seats (2) of a motor vehicle in the two configurations.

4. Boot floor for a motor vehicle according to Claim 3, **characterized in that** the level of the floor of the boot is such that, in the estate configuration, the articulated strip (13") occupies a substantially horizontal position, aligned with the upper surface of a folded seat (2) of a motor vehicle.

5. Boot floor for a motor vehicle according to one of the preceding claims, **characterized in that** the stand (7) occupies a prone position in the normal configuration of the boot, and **in that** a mechanism allows the stand (7) to assume its raised position (7") automatically when the front carpet (3) of the floor of the boot is raised.

6. Boot floor for a motor vehicle according to one of the preceding claims, **characterized in that** it comprises latching devices (5) making it possible to temporarily fix the carpet (3') of the boot in an upper position making it possible to position a canopy (1) in the storage volume (9) at the level of the stand (7") before positioning the carpet (3") in its estate configuration.

7. Boot floor for a motor vehicle according to one of the preceding claims, **characterized in that** it comprises a rear carpet (4) moveable about a front axis (15) in order to be able to free access to a storage compartment (14) positioned below the floor of the boot.

8. Boot floor for a motor vehicle according to the preceding claim, **characterized in that** the rear carpet (4) comprises latching means (11) in order to remain in an upper position (4') so as to compartmentalize the boot.

9. Boot floor for a motor vehicle according to Claim 7 or 8, **characterized in that** the rear carpet (4) comprises a first moveable flap (17) able to allow the boot to be compartmentalized and a second moveable flap (16) able to cover access to the storage compartment (14).

10. Boot floor for a motor vehicle according to the preceding claim, **characterized in that** the two flaps (16, 17) can be held together in the raised position.

11. Method for converting a boot floor from a lower normal configuration to an estate configuration, the boot floor comprising a boot carpet composed of a removable front carpet (3, 3', 3") in the continuity of a rear carpet (4) in the lower normal configuration, the method comprising the following steps:
- the front carpet (3) of the boot is raised and positioned in a transient upper position (3');
- a stand (7) extending over the width of the boot passes from the prone position into a position close to the vertical (7"), by rotation about an axis (8) ;
- a canopy (1) is moved into a storage volume (9) at the front of the boot in the vicinity of the stand (7") ;
- the front of the carpet (3") is lowered back down to bear on the raised stand (7").
